# EUROPEAN PATENT APPLICATION

(11) **EP 2 698 694 A1**
(43) Date of publication of application: **19.02.2014**
(21) Application number: 12770874.1
(22) Date of filing: 05.04.2012
(51) Int. Cl.: G06F 3/048, H04M 1/00

(54) **PORTABLE TERMINAL DEVICE, DISPLAY CONTROL METHOD, COMPUTER-READABLE MEDIUM**

(30) Priority: 12.04.2011 JP 2011088142
(71) Applicant: NEC CASIO Mobile Communications, Ltd., Kawasaki-shi Kanagawa 211-8666 (JP)
(72) Inventor: INOMATA, Masayoshi, Kawasaki-shi, Kanagawa 211-8666 (JP)
(74) Representative: Vossius & Partner
(86) International application number: PCT/JP2012/002402
(87) International publication number: WO 2012/140857

(57) **Abstract**

A portable terminal device (100) according to the present invention includes determination processing means (120) for performing a first determination process regarding whether switching of a set value is valid or invalid and performing a second determination process for a current set value; display means for displaying a screen; and display control means (130) for performing a control to display, in a predetermined display area of the screen, a switch button representing switching of a set value corresponding to the current set value determined in the second determination process when the switching is determined as valid in the first determination process, and for performing a control not to display the switch button in the predetermined display area when the switching is determined as invalid in the first determination process. This configuration can provide a display control method that prevents a user from mispercepting switchable setting items while effectively using the display area, and a portable terminal device using the method.

## Description

### Technical Field

The present invention relates to a portable terminal device, a display control method and a display control program, which are used in the device, and a computer readable medium storing the program.

### Background Art

In electronic devices including a display unit, as typified by a portable terminal device, various approaches have been taken to effectively use a limited display area.

For example, Patent Literature 1 discloses a technique for switching an icon image so as to immediately confirm the value of a setting item associated with an icon displayed on a display unit.

The recent electronic devices are mounted with various functions, and have a configuration capable of switching the functions as needed according to an instruction from a user. As for the setting that enables switching, a display method is employed in which a switch button corresponding to a set value to be switched is displayed on a display unit, thereby allowing a user to recognize that switching to the set value can be made.

### Citation List

### Patent Literature

[Patent Literature 1] Japanese Unexamined Patent Application Publication No. 2010-191720

### Summary of Invention

### Technical Problem

In the display method of the related art, however, the switch button is displayed so as to display only a set value to be switched on a screen that allows switching of the state of a terminal setting. This poses a problem that it is difficult to recognize the current setting state. As a countermeasure against this problem, it is necessary to display a current set value on the screen. To achieve this, it is necessary to secure a separate area for displaying the current set value in an area different from the display area of the switch button.

Small devices, such as a portable terminal device, inevitably have a small display area, and thus are required to effectively use the limited display area. Up to now, in the case of switching the settings, two display areas are secured, which results in a reduction in the display area to be allocated to other functions, and the setting state is constantly displayed in another area, which makes it difficult to easily recognize the valid/invalid state of switching of a set value. In other words, the current set value is displayed even in the case where the switching of the set value is invalid and the set value cannot be switched, which causes a problem of misunderstanding that the switching of the set value can be made.

The present invention has been made in view of the above-mentioned problems and has an object to provide a display control method that prevents a user from mispercepting switchable setting items while effectively using a display area, a portable terminal device using the method, and a computer readable medium storing a display control program.

### Solution to Problem

A portable terminal device according to the present invention includes: determination processing means for performing a first determination process regarding whether switching of a set value is valid or invalid, and a second determination process for a current set value; display means for displaying a screen; and display control means for performing a control to display, in a predetermined display area of the screen, a switch button representing switching of a set value corresponding to the current set value determined in the second determination process, when the switching is determined as valid in the first determination process, and for performing a control not to display the switch button in the predetermined display area when the switching is determined as invalid in the first determination process.

A portable terminal device according to the present invention includes: a first radio communication means for performing a radio communication in a first radio communication system; a second radio communication means for performing a radio communication in a second radio communication system; determination processing means for performing a first determination process for determining whether switching of radio communication systems is valid or invalid, and performing a second determination process for determining a current radio communication system; display means for displaying a screen; and display control means for performing a control to display, in a predetermined display area of the screen, a switch button representing switching of the radio communication system corresponding to the current radio communication system determined in the second determination process, when the switching is determined as valid in the first determination process, and for performing a control not to display the switch button in the predetermined display area when the switching is determined as invalid in the first determination process.

A display control method according to the present invention includes: a first determination step of determining whether switching of a set value is valid or invalid; a second determination step of determining a current set value; and a display control step of performing a control to display, in a predetermined display area, a switch button representing a current set value corresponding to the current set value determined in the second determination step, a set value to be switched, and a switching direction, when the switching is determined as valid in the first determination step, and performing a control not to display the switch button in the predetermined display area when the switching is determined as invalid in the first determination step.

A non-transitory computer readable medium according to the present invention stores a display control program for causing an information processor to execute: a first determination step of determining whether switching of a set value is valid or invalid; a second determination step of determining a current set value; and a display control step of performing a control to display, in a predetermined display area, a switch button representing a current set value corresponding to the current set value determined in the second determination step, a set value to be switched, and a switching direction, when the switching is determined as valid in the first determination step, and performing a control not to display the switch button in the predetermined display area when the switching is determined as invalid in the first determination step.

### Advantageous Effects of Invention

According to the present invention, it is possible to provide a display control method that prevents a user from mispercepting switchable setting items while effectively using a display area, a portable terminal device using the method, and a computer readable medium storing a display control program.

### Brief Description of Drawings

Fig. 1 is a block diagram showing a portable terminal device according to a first exemplary embodiment;
Fig. 2 is a flowchart showing a display control process according to the first exemplary embodiment;
Fig. 3 is a block diagram showing a portable terminal device according to a second exemplary embodiment;
Fig. 4 is a diagram showing management information according to the second exemplary embodiment;
Fig. 5 is a diagram showing an auxiliary management file according to the second exemplary embodiment;
Fig. 6A is a diagram showing an example of a display screen in a 3G setting state according to the second exemplary embodiment;
Fig. 6B is a diagram showing an example of a display screen in a WLAM setting state according to the second exemplary embodiment;
Fig. 6C is a diagram showing an example of a display screen in a setting invalid state according to the second exemplary embodiment;
Fig. 7 is a diagram showing another example of the auxiliary management file according to the second exemplary embodiment; and
Fig. 8 is a flowchart showing a display control process according to the second exemplary embodiment.

### Description of Embodiments

### (First Exemplary Embodiment)

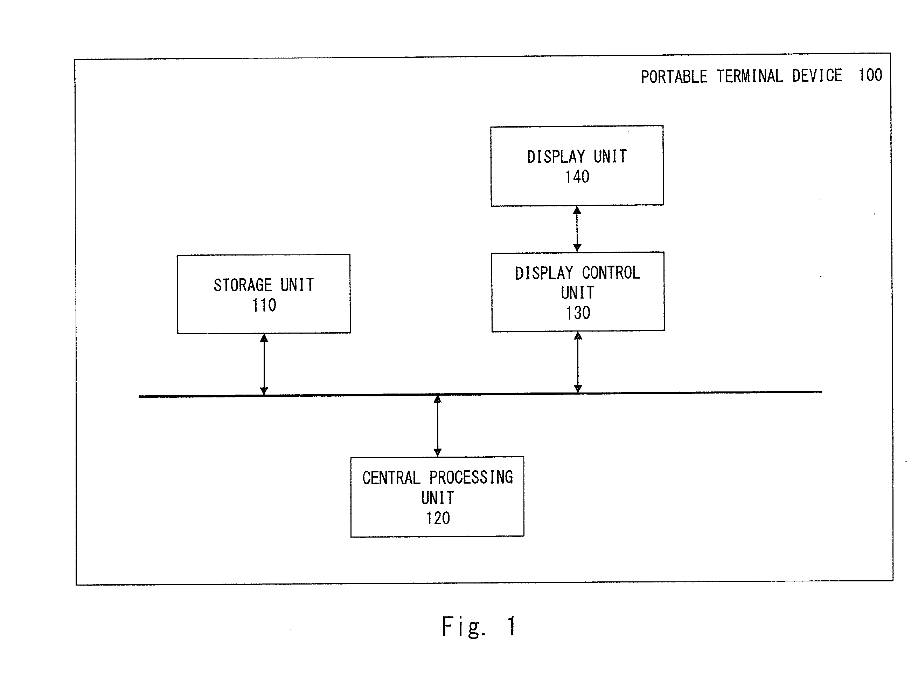

Exemplary embodiments of the present invention will be described below with reference to the drawings. Fig. 1 is a block diagram showing a configuration of a portable terminal device according to a first exemplary embodiment of the present invention.

A portable terminal device 100 according to the present invention includes a storage unit 110, a central processing unit 120, a display control unit 130, and a display unit 140.

The storage unit 110 stores management information for managing the current state of the portable terminal device. In this case, the management information includes at least information indicating whether switching of a set value is valid or invalid for a predetermined switchable item, and information on a current set value.

The storage unit 110 stores switch buttons each representing a current set value, a set value to be switched, and a switching direction. The switching direction refers to a direction of transition from one set value to another set value. For example, the direction may be indicated by an arrow, or the information may be represented by characters. Alternatively, the switching direction may be represented by the magnitude or positional relationship of the current set value and the set value to be switched. The storage unit 110 stores a plurality of switch buttons respectively corresponding to switching paths that allow switching of the set value. Specifically, the switch buttons are icons each representing the current set value, the set value to be switched, and the switching direction.

The central processing unit 120 determines whether the switching of the set value is valid or invalid. Upon determining that the switching of the set value is valid, the central processing unit 120 further determines the current set value. The central processing unit 120 outputs the determination result to the display control unit 130.

The display control unit 130 controls the display content on the display unit 140 based on the determination result received from the central processing unit 120. Specifically, when the determination result received from the central processing unit 120 indicates that the switching of the set value is valid, the display control unit 130 reads out the switch button corresponding to the current set value, and controls the display unit 140 to display the switch button. On the other hand, when the determination result received from the central processing unit 120 indicates that the switching of the set value is invalid, the display control unit performs a control such that the switch button is not displayed in the predetermined display area of the display unit 140.

The display unit 140 displays a screen according to the control of the display control unit 130. In this case, examples of the mode of the display unit 140 may include a liquid crystal display, an organic EL display, and a plasma display.

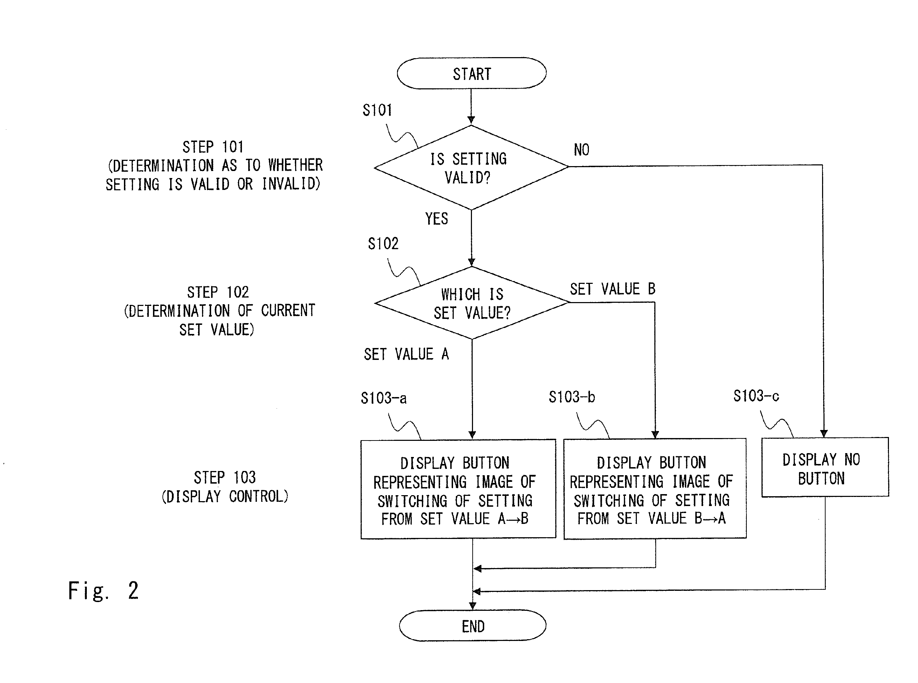

Next, a processing operation in a display control method according to the first exemplary embodiment will be described. Fig. 2 is a flowchart showing the processing operation. For a predetermined item in which the set value can be switched, the screen to be displayed on the display unit is determined according to the flow shown in Fig. 2.

First, the central processing unit 120 determines whether the switching of the set value for the predetermined item in which the set value can be switched is valid or invalid (step S101). In other words, the central processing unit 120 determines whether the current state of the portable terminal device is a state in which the set value can be switched or a state in which the set value cannot be switched, for the predetermined item in which the set value can be switched.

When it is determined that the switching of the set value is valid in step S101, the central processing unit 120 determines the current set value (step S102). In other words, the central processing unit 120 determines which is the current set value among a plurality of set values, for the item on which the determination is made in step S101. In this case, there are two set values "set value A" and "set value B" for the item.

Next, the display control unit 130 controls an image to be displayed on the display unit 140 based on the determination results of step S101 and step S102 (steps S103-a to S103-c). Specifically, the display control unit 130 performs the following processes.

When it is determined that the current set value is "set value A" in step S102, the display control unit 130 displays a switch button A, which is associated with the set value A, in the predetermined display area for displaying the item (step S103-a). The switch button A herein described refers to a button representing an image of switching of the setting from the set value A to the set value B. The switch button A is a button representing the current set value A, the set value B to be switched, and the switching direction. Specifically, when it is determined that the current set value is "set value A" in step S102, the display control unit 130 reads an image file of the switch button A, which is stored in the storage unit 110, and performs a control such that the image is displayed in the predetermined area for displaying the item.

On the other hand, when it is determined that the current set value is "set value B" in step S102, the display control unit 130 displays a switch button B associated with the set value B in the predetermined display area for displaying the item (step S103-b). The switch button B herein described refers to a button representing an image of switching of the setting from the set value B to the set value A. The switch button B is a button representing the current set value B, the set value A to be switched, and the switching direction. Specifically, when it is determined that the current set value is "set value B" in step S102, the display control unit 130 reads an image file of the switch button B, which is stored in the storage unit 110, and performs a control such that the image is displayed in the predetermined display area for displaying the item.

On the other hand, when it is determined that the switching of the set value is invalid in step S101, no switch button is displayed in the predetermined display area for displaying the item (step S103-c). In other words, when the switching of the set value for the predetermined item in which the set value can be switched is invalid, the predetermined display area for displaying the item is released, and a background image is displayed in the display area, or a setting image for another item is displayed as needed.

As described above, the portable terminal device of the present invention controls the display/non-display of the switch button according to the current state, for the predetermined item in which the set value can be switched. In the state in which the switching for the item cannot be made, the switch button is not displayed, which makes it possible to release the display area for displaying information on the item and effectively use the display area. Furthermore, the information on the item is not displayed on purpose in the display area, thereby preventing the user from misunderstanding that the item is in a switchable state.

Further, in the case of displaying the switch button, the switch button representing the current set value, the set value to be switched, and the switching direction is displayed. The use of such an image design eliminates the need for securing a separate area other than the area for displaying the button, and enables intuitive switching of the setting.

As described above, the configuration of the portable terminal device of the present invention enables designation of a set value for a more detailed operation, when validity/invalidity is set as a setting item and the setting is valid. Accordingly, the determination as to whether the switching of the set value is valid/invalid by using only the display of a button prevents the user's misperception, and enables the user to intuitively switch the setting when the set value can be switched.

### (Second Exemplary Embodiment)

A portable terminal device according to a second exemplary embodiment has a configuration in which a plurality of communication bearers can be switched, and has a feature that the plurality of communication bearers can be intuitively switched.

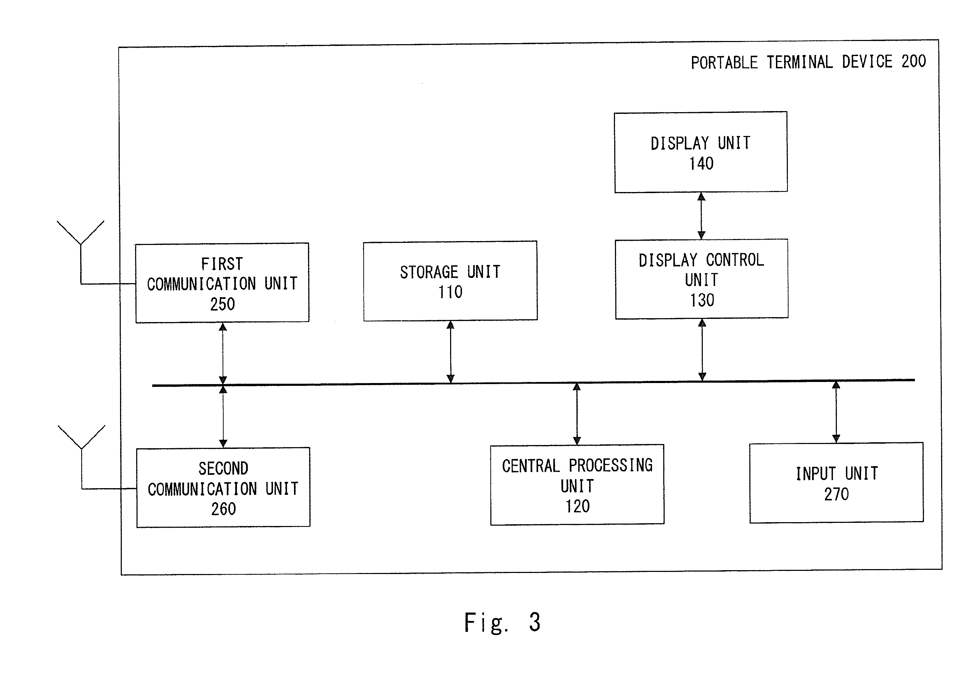

Fig. 3 is a block diagram showing a configuration of a portable terminal device 200 according to the second exemplary embodiment. The portable terminal device 200 includes the storage unit 110, the central processing unit 120, the display control unit 130, the display unit 140, a first communication unit 250, a second communication unit 260, and an input unit 270. Each block will be described below. Note that the description of the blocks explained in the first exemplary embodiment is partially omitted.

The first communication unit 250 communicates with an external radio device by using a first radio communication system. The first radio communication system herein described refers to a radio communication system used for default communication in the portable terminal device 200. The portable terminal device 200 is a radio communication device which is based on the premise that a communication is established using a mobile communication system. Accordingly, a radio communication system compliant with IMT-2000 standards, for example, is used as the first radio communication system. Specific examples of the radio communication system include W-CDMA and CDMA2000 which are 3G. The following description is made assuming that the above-mentioned 3G is used as the first radio communication system.

The second communication unit 260 communicates with an external radio device by using a second radio communication system. The second radio communication system herein described refers to a radio communication system which is mainly used for subsidiary communication in the portable terminal device 200, and is, for example, a radio communication system capable of achieving a more desirable throughput and cost effectiveness than those of the first radio communication system under a specific condition. Examples of the second radio communication system include radio communication system standards compliant with IEEE.802.11 standards. Specific examples of the second radio communication system include IEEE802.11a and IEEE802.11n which are WLAN. The following description is made assuming that the above-mentioned WLAN is used as the second radio communication system.

The input unit 270 inputs an instruction from a user. For example, when a setting is made to determine whether the switching of the first and second radio communication systems is valid or invalid, or when the switching of the setting is valid, the input unit serves as a user interface for inputting a switching instruction from a user.

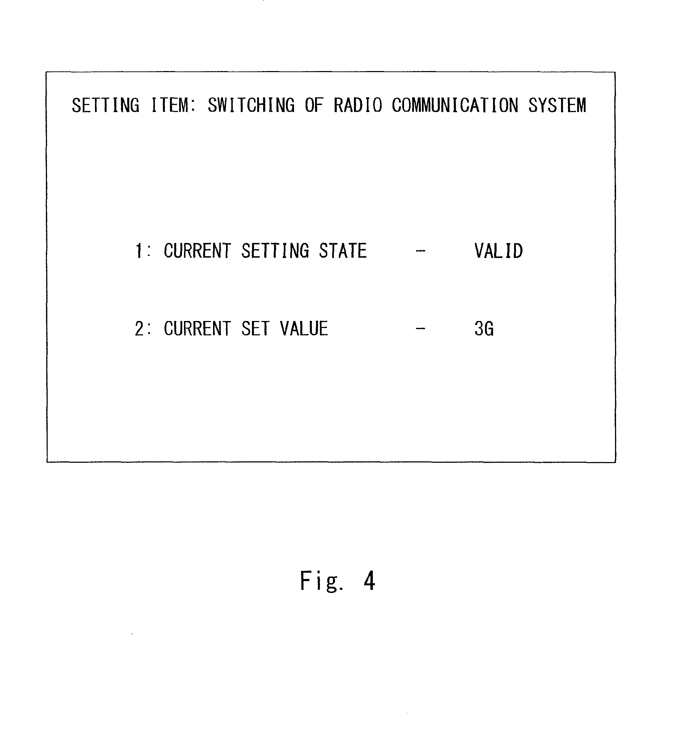

The storage unit 110 stores management information for managing the current state of the portable terminal device. The management information herein described includes at least information indicating whether switching of a set value is valid or invalid for a predetermined item which can be switched, and information on a current set value. Fig. 4 shows an example of the management information when the radio communication system is switchable. In this case, the current setting state regarding whether the switching of the set value is valid or invalid is registered as "valid". The current set value is registered as "3G".

The storage unit 110 stores switch buttons each representing the current set value, the set value to be switched, and the switching direction. The portable terminal device 200 has two switching patterns of 3G→WLAN and WLAN→3G, for the switching of the radio communication system. Accordingly, the storage unit 110 stores image files of the switch buttons corresponding to the two patterns.

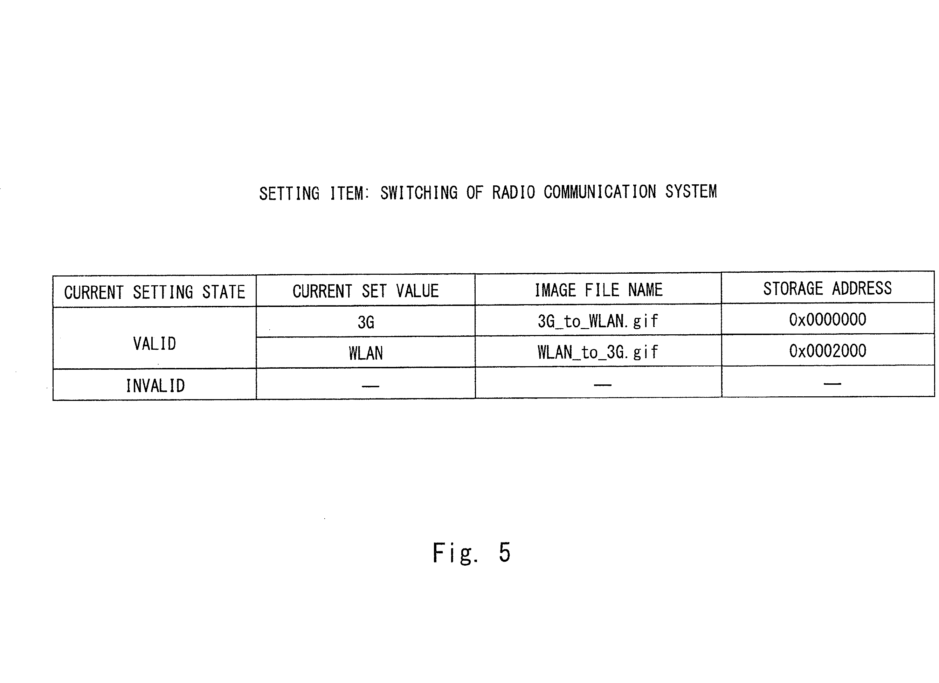

The storage unit 110 also stores an auxiliary management file including correlations between the current set value and the image file. Fig. 5 shows an example of the auxiliary management file. In the auxiliary management file, the switch button corresponding to the current setting state and the current set value is associated with each other in a table-like manner. The display control unit 130 reads out the image file corresponding to the current setting state and the current set value from the designated storage address, while referring to the auxiliary management file, based on the result of a determination process performed by the central processing unit 120, and displays the image file in the predetermined display area of the display unit 140.

The central processing unit 120 determines whether the switching of the radio communication system corresponding to the set value is valid or invalid. Upon determining that the switching of the radio communication system is valid, the central processing unit 120 further determines whether the current set value indicates 3G or WLAN. The central processing unit 120 outputs the determination result to the display control unit 130.

The display control unit 130 receives the determination result which indicates "current setting state: current set value" and is received from the central processing unit 120. In this case, there are three types, i.e., "valid: 3G", "valid: WLAN", and "invalid". The display control unit 130 reads out the switch button image, as needed, based on the auxiliary management file and the determination result, and performs a control for displaying the switch button image on the display unit 140.

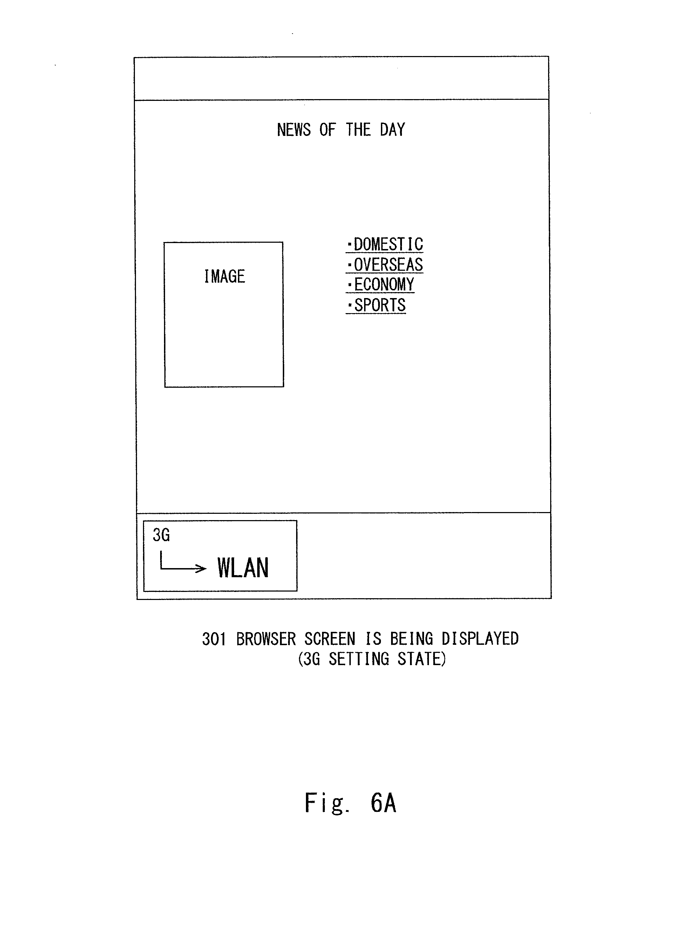

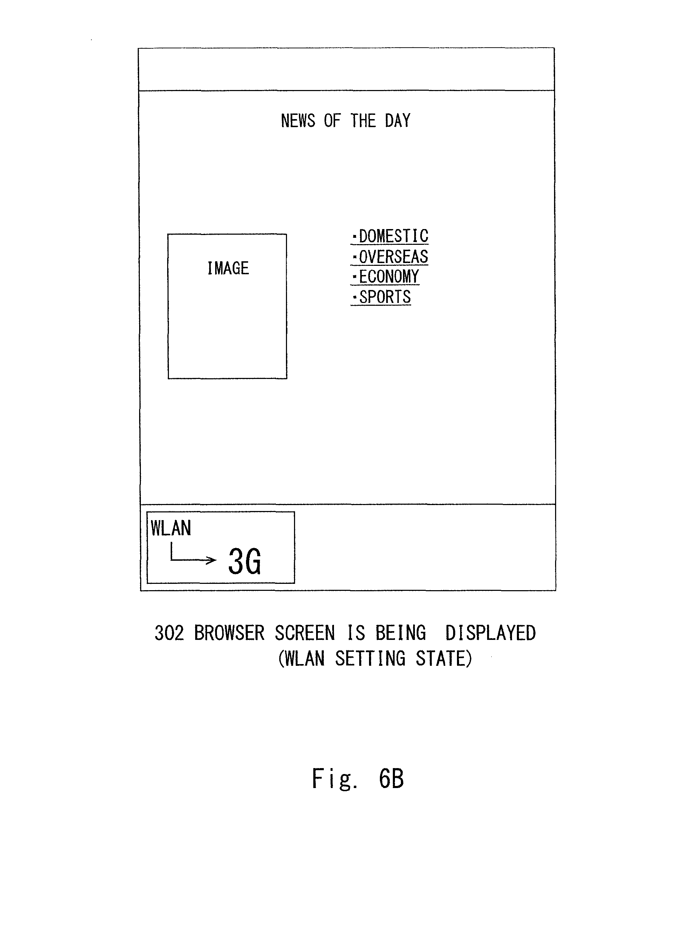

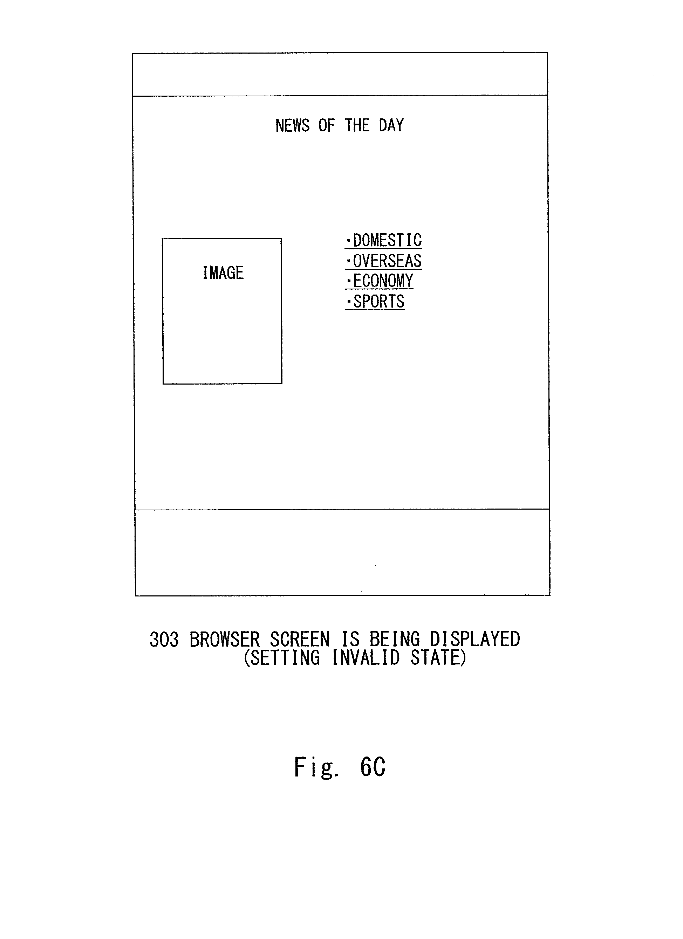

Next, a screen displayed on the display unit according to the display control performed by the display control unit 130 based on the determination result will be described. Figs. 6 show browser screens for the above-mentioned three types. A switch button representing an image for switching of the radio communication system is displayed in a lower left area of the screen. In this case, the switch button includes three pieces of information, i.e., the current radio communication system, the switching direction, and the radio communication system to be switched. This enables a user to intuitively recognize the state in which the radio communication system is switchable, simply by looking at the switch button.

For the user to switch the radio communication system while viewing the display, the user can easily switch the radio communication system by selecting the switch button through the input unit 270. For example, when the current set value indicates 3G in Figs. 6, the user looks at the switch button displayed on a screen 301 and recognizes the state in which the radio communication system is switchable, and selects the switch button, thereby making it possible to change the current set value from 3G to WLAN. The selection enables switching of the radio communication system to be used, and also enables switching of the browser screen 301 displayed on the display unit 140 to a browser screen 302.

As described above, the portable terminal device according to this exemplary embodiment enables intuitive recognition of the switching of the radio communication system by the display of the switch button. While the case where the two radio communication systems 3G and WLAN can be used in the portable terminal device has been described above, the configuration of the portable terminal device is not limited to this. The portable terminal device may have a configuration in which a larger number of radio communication systems can be used.

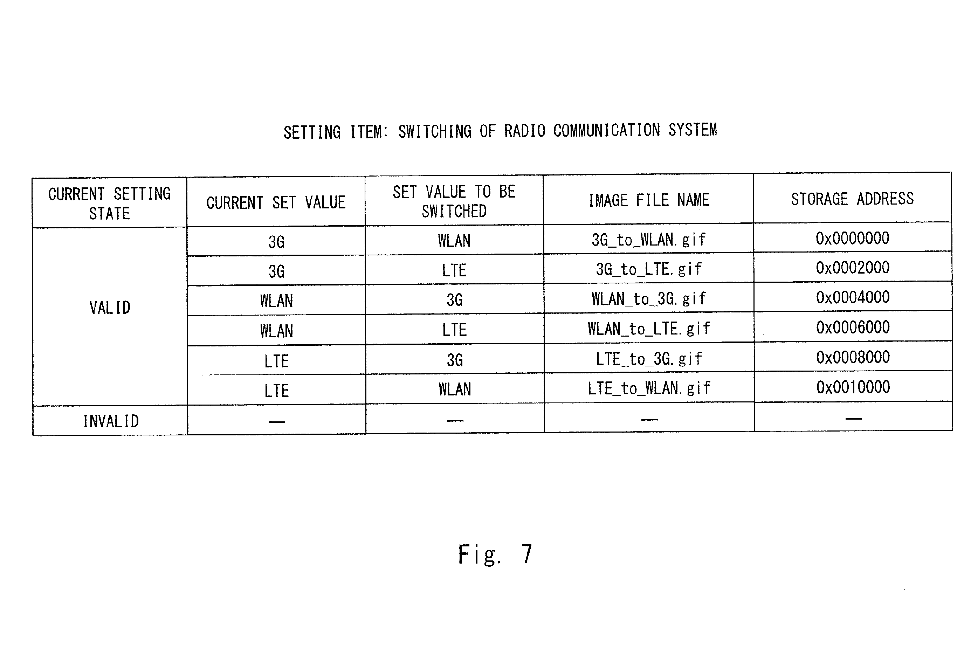

Fig. 7 shows an example of the auxiliary management file in the portable terminal device including three radio communication units respectively corresponding to "3G", "WLAN", and "LTE". In this case, there are two switching patterns for one radio communication system. Accordingly, the central processing unit 120 further determines a switching destination.

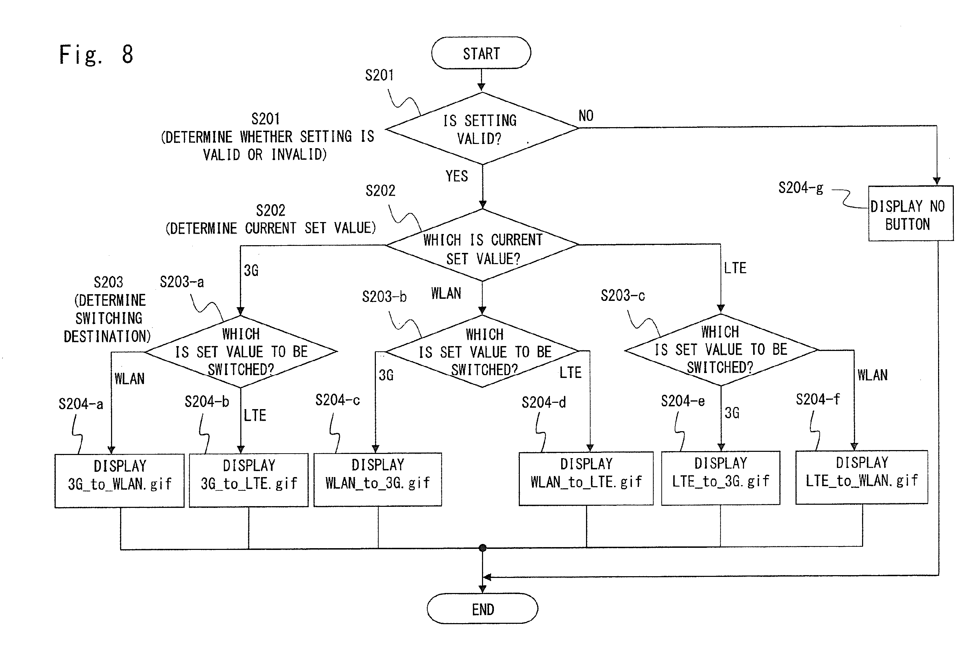

Fig. 8 is a flowchart showing a processing operation in the portable terminal device having the configuration described above. The central processing unit 120 determines whether the current setting state of the portable terminal device indicates a switchable state (step S201). Specifically, the central processing unit determines whether the radio communication system is in a switchable state.

When it is determined that the switching of the set value is valid in step S201, the central processing unit 120 determines the current set value (step S202). Specifically, as for the radio communication system, the central processing unit 120 determines which one of the plurality of radio communication systems corresponds to the current radio communication system. As a result of the determination in step S202, when it is determined that the current radio communication system is 3G, the process proceeds to step S203-a; when it is determined that the current radio communication system is WLAN, the process proceeds to step S203-b; and when it is determined that the current radio communication system is LTE, the process proceeds to step S203-c.

Next, the central processing unit 120 determines the set value to be switched (steps S203-a to S203-c). Specifically, the central processing unit 120 determines which radio communication system is switchable from the radio communication system currently used. In this case, when there are multiple switchable radio communication systems, a radio communication system having a higher priority among the multiple radio communication systems is determined as the switchable radio communication system. The determination results obtained in step S201 to step S203 are output to the display control unit 130.

As an example, when the current radio communication system is determined as 3G as a result of the determination in step S202, the central processing unit 120 makes a determination as to the switching destination which is switchable from the the current radio communication system 3G (step S203-a). As a result of the determination in step S203-a, when it is determined that the radio communication system can be switched to WLAN, the process proceeds to step S204-a, and when it is determined that the radio communication system can be switched to LTE, the process proceeds to step S204-b.

The display control unit 130 performs an appropriate display control based on the determination result received from the central processing unit 120 (steps S204-a to S204-g). Specifically, the display control unit reads out, from the storage address of the storage unit 110, the image file of the switch button corresponding to the determination result, while referring to the auxiliary management file, and performs a control to display the read switch button on the display unit 140. As a result of the determination, when the current setting state is "invalid", the display control unit 130 performs a display control to display no switch button.

This configuration enables display/non-display of the switch button and appropriate selection of the switch button, even when three or more switching paths exist.

While the configuration in which the current radio communication system is determined in a preceding stage and the radio communication system to be switched is determined in a subsequent stage has been described above, the configuration is not limited to this. It is also possible to employ a configuration in which the radio communication system to be switched is first determined in step S202 and the current radio communication system is determined in step S203. This processing procedure enables the same display control as that described above.

As for the validity/invalidity of the current setting state, it is possible to employ a configuration in which the setting and registration are performed by a user through the input unit 270, or a configuration in which a detection unit that detects and recognizes the current state regarding the setting item is separately provided.

For example, in a portable terminal device which can establish a communication using three radio communication systems 3G, WLAN, and LTE, the radio communication units respectively corresponding to the radio communication systems periodically measure the reception level of radio waves in an allocated frequency band. When a radio wave having a predetermined reception level or higher is detected in each radio communication unit, the radio communication unit determines that the corresponding radio communication system is available, and outputs an available signal to the central processing unit 120. Similarly, when the radio wave having the predetermined reception level or higher is not detected any more in each radio communication unit, the radio communication unit determines that the corresponding radio communication system is not in the available state, and outputs an unavailable signal to the central processing unit 120.

The central processing unit 120 starts the determination process shown in the flowchart of Fig. 8, with the above-mentioned available signal and unavailable signal, which are input from each radio communication unit, as a trigger, and outputs the determination results obtained in steps S201 to 203 to the display control unit 130. The display control unit 130 switches the displays shown in S204-a to S204-g according to the determination result newly output from the central processing unit 120, which allows an appropriate display on the display unit 140. Such a configuration can be used.

In the case of detecting whether a plurality of radio communication systems mounted in a portable terminal device is in an available state, a detection unit that detects whether the own radio communication system is in the available state may be provided in each radio communication unit. Alternatively, a detection unit that collectively detects whether the radio communication systems are in the available state may be provided.

The display control processes shown in Figs. 2 and 8 can also be implemented by causing the central processing unit 120 or the display control unit 130 to execute a display control program. Moreover, the present invention can also implement arbitrary processing by causing a CPU (Central Processing Unit) to execute a computer program.

The above-mentioned program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

Note that any design of each switch button can be displayed regardless of whether it is a character string or an image, and a more intuitive display can be provided.

While the portable terminal devices have been described above, the present invention is not limited thereto. The present invention is applicable not only to portable terminals, but also to electronic devices that are capable of setting validity/invalidity and displaying the set value on a screen when the setting is effective, to thereby enable switching of the setting.

Note that the present invention is not limited to the above-described exemplary embodiments, but can be modified as appropriate without departing from the scope of the present invention. For example, the following modes can be adopted.
(1) A portable terminal device comprising:
   determination processing means for performing a first determination process regarding whether switching of a set value is valid or invalid, and performing a second determination process for a current set value;
   storage means for storing a switch button representing the switching of the set value;
   display means for displaying a screen; and
   display control means for performing a control to display, in a predetermined display area of the screen, the switch button corresponding to the current set value determined in the second determination process, when the switching is determined as valid in the first determination process, and for performing a control not to display the switch button in the predetermined display area when the switching is determined as invalid in the first determination process.
(2) The portable terminal device according to (1), wherein the determination processing means performs the first determination process regarding whether the switching of the set value is valid or invalid, and performs the second determination process for the current set value when the switching is determined as valid in the first determination process.
(3) The portable terminal device according to (1) or (2), wherein the switch button is a button representing a current set value, a set value to be switched, and a switching direction.
(4) The portable terminal device according to any one of (1) to (3), wherein the storage means further stores, as management information, information on whether the switching of the set value is valid or invalid and information on the current set value, and the determination processing means refers to the management information and performs the first determination process and the second determination process.
(5) A portable terminal device comprising:
   a first radio communication means for performing a radio communication in a first radio communication system;
   a second radio communication means for performing a radio communication in a second radio communication system;
   determination processing means for performing a first determination process for determining whether switching of radio communication systems is valid or invalid, and performing a second determination process for determining a current radio communication system;
   storage means for storing a switch button representing the switching of radio communication systems;
   display means for displaying a screen; and
   display control means for performing a control to display, in a predetermined display area of the screen, the switch button corresponding to the current radio communication system determined in the second determination process, when the switching is determined as valid in the first determination process, and for performing a control not to display the switch button in the predetermined display area of the screen when the switching is determined as invalid in the first determination process.
(6) The portable terminal device according to (5), wherein the determination processing means performs the first determination process for determining whether switching of radio communication systems is valid or invalid, and performs the second determination process for determining a current radio communication system, when the switching is determined as valid in the first determination process.
(7) The portable terminal device according to (5) or (6), wherein the switch button is a button representing a current radio communication system, a radio communication system to be switched, and a switching direction.
(8) The portable terminal device according to any one of (5) to (7), further comprising detection means for detecting whether radio communication is available in each of the first radio communication means and the second radio communication means, wherein the determination processing means determines in the first determination process that the switching of radio communication systems is valid, when the detection means detects that radio communication is available in each of the first radio communication means and the second radio communication means, and determines that the switching of radio communication systems is invalid, when it is detected that radio communication is unavailable in one of the radio communication means.
(9) A display control method comprising:
   a first determination step of determining whether switching of a set value is valid or invalid;
   a second determination step of determining a current set value; and
   a display control step of performing a control to display, in a predetermined display area, a switch button representing switching of a set value corresponding to the current set value determined in the second determination step, when the switching is determined as valid in the first determination step, and performing a control not to display the switch button in the display area when the switching is determined as invalid in the first determination step.
(10) A non-transitory computer readable medium storing a display control program for causing an information processor to execute:
   a first determination step of determining whether switching of a set value is valid or invalid;
   a second determination step of determining a current set value; and
   a display control step of performing a control to display, in a predetermined display area, a switch button representing switching of a set value corresponding to the current set value determined in the second determination step, when the switching is determined as valid in the first determination step, and performing a control not to display the switch button in the display area when the switching is determined as invalid in the first determination step.
(11) The display control method according to (9), wherein the second determination step includes determining the current set value when the switching of the set value is determined as valid in the first determination step.
(12) The display control method according to (9), wherein the switch button representing the switching of the set value is a button representing a current set value, a set value to be switched, and a switching direction.
(13) The display control method according to (9), further comprising a storage step of storing, as management information, information on whether the switching of the set value is valid or invalid and information on the current set value, wherein each of the first determination step and the second determination step includes referring to the management information, determining whether the switching of the set value is valid or invalid, and determining the current set value.
(14) A display control method for use in a portable terminal device connectable to an external communication device in each of a first radio communication system and a second radio communication system, the display control method comprising:
   a first determination step of determining whether switching from the first radio communication system to the second radio communication system is valid or invalid;
   a second determination step of determining which one of the first radio communication system and the second radio communication system is currently set as a radio communication system for radio communication with the external communication device, when the switching is determined as valid in the first determination step; and
   a display control step of performing a control to display, in a predetermined display area, a button representing switching from the currently-set radio communication system corresponding to the currently-set radio communication system determined in the second determination step to the other radio communication system, when the switching is determined as valid in the first determination step, and performing a control not to display, in the display area, the button representing the switching of radio communication systems, when the switching is determined as invalid in the first determination step.
(15) The non-transitory computer readable medium storing the display control program according to (10), wherein the information processor is caused to execute the second determination step of determining the current set value when the switching of the set value is determined as valid in the first determination step.
(16) The non-transitory computer readable medium storing the display control program according to (10), wherein the information processor is further caused to execute a storage step of storing, as management information, information on whether the switching of the set value is valid or invalid and information on the current set value, and a computation processing device is caused to execute a determination process regarding whether the switching of the set value is valid or invalid and a determination process for the current set value, by referring to the management information.
(17) The portable terminal device according to (5), further comprising input means for inputting a switching instruction from a user, wherein the determination processing means performs a control to switch the radio communication system to be used from the current radio communication system to the other radio communication system, based on the switching instruction.
(18) A portable terminal device comprising:
   determination processing means for performing a first determination process regarding whether switching of a set value is valid or invalid, and performing a second determination process for a set value to be switched;
   storage means for storing a switch button representing the switching of the set value;
   display means for displaying a screen; and
   display control means for performing a control to display, in a predetermined display area of the screen, the switch button corresponding to the set value to be switched that is determined in the second determination process, when the switching is determined as valid in the first determination process, and for performing a control not to display the switch button in the predetermined display area when the switching is determined as invalid in the first determination process.
(19) The portable terminal device according to (18), wherein the determination processing means performs the first determination process regarding whether the switching of the set value is valid or invalid, and performs the second determination process for the set value to be switched, when the switching is determined as valid in the first determination process.

This application is based upon and claims the benefit of priority from Japanese patent application No. 2011-088142, filed on April 12, 2011, the disclosure of which is incorporated herein in its entirety by reference.

### Industrial Applicability

The present invention is also applicable to terminal devices for used in various mobile communication systems to be implemented in the future, as typified by mobile communication systems such as 3G and LTE (Long Term Evolution).

### Reference Signs List

- 100: PORTABLE TERMINAL DEVICE
- 110: STORAGE UNIT
- 120: CENTRAL PROCESSING UNIT
- 130: DISPLAY CONTROL UNIT
- 140: DISPLAY UNIT
- 200: PORTABLE TERMINAL DEVICE
- 250: COMMUNICATION UNIT
- 260: COMMUNICATION UNIT
- 270: INPUT UNIT

## Claims

1. A portable terminal device comprising:
determination processing means for performing a first determination process regarding whether switching of a set value is valid or invalid, and a second determination process for a current set value;
display means for displaying a screen; and
display control means for performing a control to display, in a predetermined display area of the screen, a switch button representing switching of a set value corresponding to the current set value determined in the second determination process, when the switching is determined as valid in the first determination process, and for performing a control not to display the switch button in the predetermined display area when the switching is determined as invalid in the first determination process.

2. The portable terminal device according to Claim 1, wherein the determination processing means performs the first determination process regarding whether the switching of the set value is valid or invalid, and performs the second determination process for the current set value when the switching is determined as valid in the first determination process.

3. The portable terminal device according to Claim 1 or 2, wherein the switch button is an icon representing a current set value, a set value to be switched, and a switching direction.

4. The portable terminal device according to any one of Claims 1 to 3, further comprising storage means for storing, as management information, information indicating whether the switching of the set value is valid or invalid and information on the current set value,
wherein the determination processing means refers to the management information and performs the first determination process and the second determination process.

5. A portable terminal device comprising:
a first radio communication means for performing a radio communication in a first radio communication system;
a second radio communication means for performing a radio communication in a second radio communication system;
determination processing means for performing a first determination process for determining whether switching of radio communication systems is valid or invalid, and performing a second determination process for determining a current radio communication system;
display means for displaying a screen; and
display control means for performing a control to display, in a predetermined display area of the screen, a switch button representing switching of the radio communication system corresponding to the current radio communication system determined in the second determination process, when the switching is determined as valid in the first determination process, and for performing a control not to display the switch button in the predetermined display area when the switching is determined as invalid in the first determination process.

6. The portable terminal device according to Claim 5, wherein the determination processing means performs the first determination process for determining whether the switching of radio communication systems is valid or invalid, and performs the second determination process for determining the current radio communication system when the switching is determined as valid in the first determination process.

7. The portable terminal device according to Claim 5 or 6, wherein the switch button is an icon representing a current set value, a set value to be switched, and a switching direction.

8. The portable terminal device according to any one of Claims 5 to 7, further comprising detection means for detecting whether radio communication is available in each of the first radio communication means and the second radio communication means,
wherein the determination processing means determines in the first determination process that the switching of radio communication systems is valid, when the detection means detects that radio communication is available in each of the first radio communication means and the second radio communication means, and determines that the switching of radio communication systems is invalid, when it is detected that radio communication is unavailable in one of the radio communication means.

9. A display control method comprising:
a first determination step of determining whether switching of a set value is valid or invalid;
a second determination step of determining a current set value; and
a display control step of performing a control to display, in a predetermined display area, a switch button representing a current set value corresponding to the current set value determined in the second determination step, a set value to be switched, and a switching direction, when the switching is determined as valid in the first determination step, and performing a control not to display the switch button in the predetermined display area when the switching is determined as invalid in the first determination step.

10. A non-transitory computer readable medium storing a display control program for causing an information processor to execute:
a first determination step of determining whether switching of a set value is valid or invalid;
a second determination step of determining a current set value; and
a display control step of performing a control to display, in a predetermined display area, a switch button representing a current set value corresponding to the current set value determined in the second determination step, a set value to be switched, and a switching direction, when the switching is determined as valid in the first determination step, and performing a control not to display the switch button in the predetermined display area when the switching is determined as invalid in the first determination step.
